(19) **Europäisches Patentamt**

**European Patent Office**

**Office européen des brevets**

(11) **EP 0 644 678 B1**

(12) **EUROPÄISCHE PATENTSCHRIFT**

(45) Veröffentlichungstag und Bekanntmachung des Hinweises auf die Patenterteilung:
**15.03.2000 Patentblatt 2000/11**

(51) Int. Cl.⁷: **H04L 27/06**

(21) Anmeldenummer: **94109388.2**

(22) Anmeldetag: **17.06.1994**

(54) **Empfänger für ASK-modulierte Mikrowellensignale**

Receiver for ASK-modulated microwave signals

Récepteur pour signaux micro-ondes modulés en sauts d'amplitude

(84) Benannte Vertragsstaaten:
**AT BE DE FR GB NL**

(30) Priorität: **30.08.1993 DE 4329122**

(43) Veröffentlichungstag der Anmeldung:
**22.03.1995 Patentblatt 1995/12**

(73) Patentinhaber: **ROBERT BOSCH GMBH**
**70442 Stuttgart (DE)**

(72) Erfinder: **Petry, Hans-Peter, Dr.**
**D-74429 Sulzbach-Laufen (DE)**

(56) Entgegenhaltungen:
**EP-A- 0 498 004          WO-A-92/08954**
**US-A- 4 075 571          US-A- 4 249 134**

EP 0 644 678 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft einen Empfänger für ASK-modulierte Mikrowellensignale, welcher einen mindestens ein nichtlineares Element aufweisenden Hüllkurvendetektor besitzt.

Beispielsweise in Verkehrsinformations- oder Verkehrsleitsystemen oder in Systemen zur automatischen Gebührenerfassung im Straßenverkehr sind die Verkehrsteilnehmer mit Sende/Empfangsgeräten, sogenannten "On Board Units", ausgestattet, die es erlauben, mit Feststationen an den Verkehrswegen Daten auszutauschen.

Wie aus der DE 40 35 398 A1 hervorgeht, senden die Baken ASK (Amplitude Shift Keying)-modulierte Signale aus, welche mit einem sich durch sehr geringen Schaltungsaufwand auszeichnenden Hüllkurvendetektor empfangen lassen. Ein solcher Hüllkurvendetektor besteht im wesentlichen aus mindestens einem nichtlinearen Element (z.B. Schottky Diode), das einen gesteuerten Wirkwiderstand darstellt. Die vorgegebene Impedanz einer in der "On Board Unit" integrierten Antenne ist dabei mit Hilfe einer geeigneten Anpaßschaltung an den gesteuerten Wirkwiderstand des Hüllkurvendetektors anzupassen. Die Verwendung eines gesteuerten Wirkwiderstandes zur Demodulation der ASK-modulierten Signale bedingt einen beträchtlichen Konversionsverlust. Dieser Konversionsverlust am Empfängereingang führt ohne rauscharme Vorverstärkung zu einer schlechten Eingangsempfindlichkeit, die darüber hinaus noch durch die niederfrequenten Rauschanteile des gesteuerten Wirkwiderstandes weiter verringert wird.

Aus dem US Patent 4,075,571 ist ein Detektor für pulsförmige Radarsignale bekannt. Dabei besteht der Detektor aus einer Diode, die einen gesteuerten Wirkwiderstand darstellt. Der Diode ist ein R/C-Glied zur Integration der detektierten Radarimpulse nachgeschaltet.

Der Erfindung liegt nun die Aufgabe zugrunde, einen Empfänger der eingangs genannten Art anzugeben, bei dem mit möglichst wenig Schaltungsaufwand eine höhere Eingangsempfindlichkeit erreicht wird als bei einem Hüllenkurvendetektor mit gesteuertem Wirkwiderstand.

Erfindungsgemäß wird diese Aufgabe durch die Merkmale des Anspruchs 1 gelöst. Vorteilhafte Ausführungen der Erfindung gehen aus den Unteransprüchen hervor.

Nach der Erfindung wird anstelle eines gesteuerten Wirkwiderstandes ein gesteuerter Blindwiderstand verwendet. Dadurch verringern sich die Konversionsverluste des Empfängers und sein Signal/Rausch-Verhältnis verbessert sich.

Anhand eines in der Zeichnung dargestellten Ausführungsbeispiels wird nun die Erfindung näher erläutert.

Figur 1 zeigt ein Prinzipschaltbild eines Empfängers mit einem Hüllkurvendetektor,

Figur 2 zeigt ein Ersatzschaltbild des Hüllkurvendetektors,

Figur 3 zeigt eine praktische Ausführung des Empfängers und

Figur 4 zeigt einen Diversity-Empfänger.

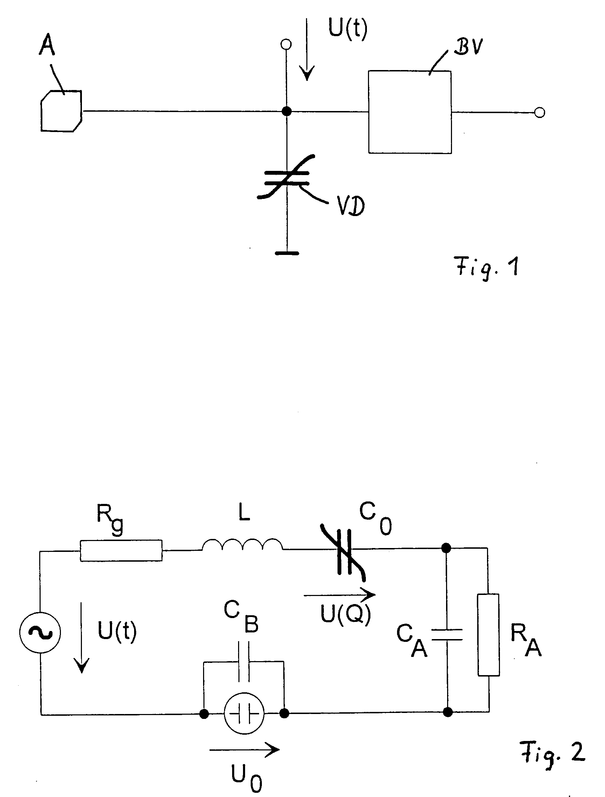

Der in Figur 1 dargestellte Empfänger für ASK-modulierte Mikrowellensignale weist eine Antenne A, die vorzugsweise in Streifenleitungstechnik realisiert ist, und einen daran angeschlossenen Hüllkurvendetektor auf, dessen nichtlineares Element ein gesteuerter Blindwiderstand VD, z. B. eine Varaktoriode ist.

Durch die Verwendung eines gesteuerten Blindwiderstandes VD haben niederfrequente (1/f) Rauschanteile keinen Einfluß auf die Eingangsempfindlichkeit des Empfängers. Das an dem gesteuerten Blindwiderstand VD detektierte NF-Signal wird von einem Basisband-Verstärker BV, der ein hochohmiger Operationsverstärker sein kann, verstärkt. Bedingt durch die Reaktanzeigenschaften des verwendeten gesteuerten Blindwiderstandes VD ist folgende Verbesserung des Empfängers möglich. Wird das Antennenelement A als Resonator so abgestimmt, daß sich mit der Reaktanz der Varaktordiode VD bei der Betriebsfrequenz eine Serienresonanz ergibt, so entsteht an der Varaktordiode VD eine Stromüberhöhung, die dem Quadrat der Betriebsgüte des Resonanzkreises proportional ist. Diese Stromüberhöhung führt zu einer Verbesserung der Signal-Rauscheigenschaften der Schaltung. Zusätzlich erhält die Gesamtschaltung durch diese Maßnahme Filtereigenschaft, die vorteilhaft zur Unterdrückung unerwünschter Spektralanteile verwendet werden kann.

Die beschriebene Schaltung kann zusätzlich auch als Modulator betrieben werden. Dies kann durch eine reine Spannungssteuerung der Varaktordiode VD leistungslos erfolgen. Durch Anlegen einer Spannung U(t) wird der Resonanzkreis, gebildet aus der Varaktordiode VD und der Antenne A, verstimmt und dadurch eine Tastung des hochfrequenten Signals ermöglicht. Die Parameter der Tastung werden durch die Betriebsgüte und die Größe der angelegten Spannung U(t) bestimmt.

Die in Figur 2 dargestellte Ersatzschaltung des Hüllkurvendetektors mit einer Varaktordiode VD läßt sich folgendermaßen beschreiben.

Der Strom-Spannungszusammenhang einer Varaktordiode im Sperrgebiet läßt sich bei abruptem Dotierungs-

profil wie folgt darstellen:

$$C(U)=C_0\left[1+\sqrt{1-\frac{U}{\Phi}}\right] \tag{1}$$

wobei $C_0$ die Kapazität der Varaktordiode ohne Vorspannung (U=0) und $\Phi$ das statische Arbeitspunktpotential ist. Im Ersatzschaltbild ist $U_0$ die Gleichspannung im Arbeitspunkt,und mit L ist eine Induktivität bezeichnet.

Durch Einbau in einen Serienresonanzkreis mit hoher Güte erreicht man, daß Strom bzw. Ladung rein harmonische Größen sind. Die Ladung Q erhält man aus (1) durch Integration nach der Spannung U:

$$Q(U)=2C_0\Phi\left[1-\left[1-\sqrt{1-\frac{U}{\Phi}}\right]\right] \tag{2}$$

Die gesuchte zeitabhängige Spannung U als Funktion der Ladung Q ergibt sich dann aus der Umkehrfunktion gemäß:

$$U(Q(t))=\frac{1}{C_0}Q(t)+\frac{1}{4\Phi}\left(\frac{1}{C_0}Q(t)\right)^2 \tag{3}$$

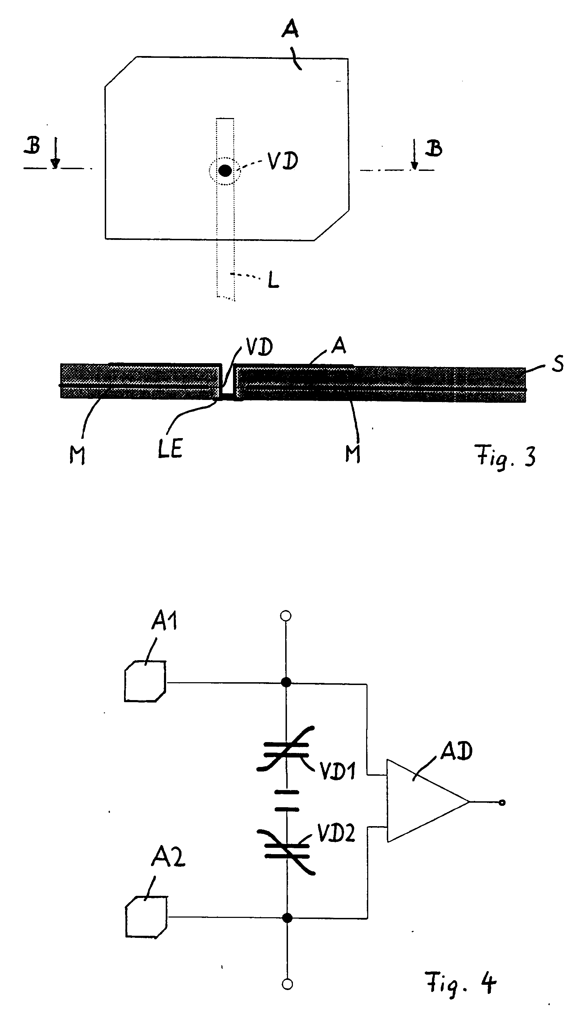

Betrachtet man den Serienkreis der Figur 3, in dem die Kapazitäten $C_A$ und $C_B$ für die Betriebsfrequenz einen Kurzschluß darstellen sollen, so erhält man mit dem Generatorwiderstand $R_g$ und dem Lastwiderstand $R_A$ für die hochfrequente Ladung

$$Q(t)=\int_0^t I(t')dt' \tag{4}$$

$$Q(t)=\frac{1}{R_g}\int_0^t U(t')dt'+Q_0$$

wobei $Q_0=0$ gesetzt werden kann. Im Empfangsfalle ist das Eingangssignale für eine ASK mit harter Tastung

$$u(t)=A(t)\cos(\omega_0 t + \varphi_0) \tag{5}$$

$$A(t)=\begin{cases} A_o & \text{High} \\ 0 & \text{Low} \end{cases} \tag{6}$$

Aus (4) erhält man im gewählten Arbeitspunkt für den zeitabhängigen Anteil der Ladung

$$Q(t)=\frac{A_0}{R_g\omega_0}\sin(\omega_0 t+\varphi_0) \tag{7}$$

Einsetzen in (3) ergibt

$$U(t)=\frac{A_0}{C_0 R_g \omega_0}\sin(\omega_0 t+\varphi_0)+\frac{1}{4\Phi}\left(\frac{A_0}{C_0 R_g \omega_0}\right)^2 \sin^2(\omega_0 t+\varphi_0) \qquad (8)$$

mit der Betriebsgüte des Serienresonanzkreises

$$Q_B=\frac{1}{\omega_0 R_g C_0} \qquad (9)$$

nach Tiefpaßfilterung den Gleichanteil

$$U_{DC}=\frac{1}{8\Phi}(A_0 Q_B)^2 \qquad (10)$$

Dieser Gleichanteil ist um die Betriebsgüte des Kreises überhöht am Ausgang der Schaltung vorhanden. Es ist also mit einem deutlich günstigeren Konversionsverhalten zu rechnen. Das auf der Eingangsseite vorhandene Rauschen wird in der gleichen Weise behandelt. Die verfügbare Rauschleistung nimmt mit abnehmender Bandbreite ab. Zusätzliche niederfrequente Rauschanteile durch Schrot- oder Funkelrauschen sind nicht vorhanden.

Die praktische Ausführung der Schaltung kann in vielfacher Weise erfolgen. Das HF-technische Layout orientiert sich zunächst am Typ der verwendeten Antenne. Für Anwendungen in der Verkehrsleittechnik sind ausschließlich Streifenleitungsschaltungen vorgesehen. Liegen in diesem Fall Zuleitung und Antenne auf einer Seite des verwendeten Substratmaterials, kann eine Varaktordiode in einem geeigneten Gehäuse direkt auf die Streifenleitung aufgebracht werden. Der NF-Anschluß bzw. die Einspeisung einer Steuerspannung für die Modulation kann dann z.B. über eine hochohmige Leitung erfolgen.

In besonderen Fällen sind die planare Antenne A und die Zuleitungen getrennt voneinander auf gegenüberliegenden Substratseiten anzuordnen. Die Figur 3 zeigt eine solche Anordnung im oberen Teil in einer Draufsicht und im unteren Teil in einem Querschnitt B-B. Auf der Oberseite des Substrats S befindet sich ein planares Antennenelement A und dessen zugehörige Masseleitung M im Innern des Substrats S. Auf der Unterseite des Substrats S sind die Zuleitung LE zur Antenne A und evtl. noch andere Schaltungselemente aufgebracht. Die Kopplung der Antenne A mit der Zuleitung LE erfolgt über eine Durchkontaktierung im Substrat S. Die Durchkontaktierung vom planaren Antennenelement A zur Leitung LE geschieht vorteilhafterweise über das Gehäuse der in eine Bohrung im Substrat S eingesetzten Varaktordiode VD.

Der Figur 4 ist ein Diversityempfänger zu entnehmen. Dabei sind zwei Antennen A1 und A2 mit jeweils einer Varaktordiode VD1, VD2 beschaltet. Die detektierten niederfrequenten Ausgangssignale werden von einem Addierer AD zusammengefaßt. Zum Ausgleich von Exemplarstreuungen der Varaktordiode und zur Verbesserung der Gleichtaktunterdrückung ist es zweckmäßig, eine Gegentaktschaltung zu verwenden.

**Patentansprüche**

1. Empfänger für ASK-modulierte Mikrowellensignale, welcher einen mindestens ein nichtlineares Element aufweisenden Hüllkurvendetektor besitzt, dadurch gekennzeichnet, daß das nichtlineare Element (VD, VD1, VD2) überwiegend aus einem gesteuerten Blindwiderstand besteht.

2. Empfänger nach Anspruch 1, dadurch gekennzeichnet, daß das nichtlineare Element (VD, VD1, VD2) eine Varaktoriode ist.

3. Empfänger nach Anspruch 1, dadurch gekennzeichnet, daß das nichtlineare Element (VD, VD1, VD2) zusammen mit einer daran angeschlossenen planaren Antenne (A, A1, A2) einen Resonanzkreis bildet.

4. Empfänger nach einem der vorhergehenden Ansprüche, dadurch gekennzeichnet, daß zwei jeweils mit einer eigenen Antenne (A1, A2) gekoppelte nichtlineare Elemente (VD1, VD2) im Gegentakt geschaltet sind und daß ein Addierer (AD) die an den nichtlinearen Elementen (VD1, VD2) detektierten Signale zusammenfaßt.

5. Empfänger nach einem der vorhergehenden Ansprüche, dadurch gekennzeichnet, daß die Kopplung einer planaren Antenne (A) auf einer Seite eines Substrats (S) mit einer planaren Zuleitung (LE) auf der gegenüberliegenden Seite des Substrats (S) über eine mit der Antenne (A) verbundene und durch das Substrat (S) geführte Varaktordiode (VD) erfolgt.

**Claims**

1. Receiver for ASK-modulated microwave signals, which has an envelope curve detector having at least one non-linear element, characterized in that the non-linear element (VD, VD1, VD2) is composed predominantly of a controlled reactive impedance.

2. Receiver according to Claim 1, characterized in that the non-linear element (VD, VD1, VD2) is a varactor diode.

3. Receiver according to Claim 1, characterized in that the non-linear element (VD, VD1, VD2) forms a resonant circuit together with a planar antenna (A, A1, A2) connected to it.

4. Receiver according to one of the preceding claims, characterized in that two non-linear elements (VD1, VD2), which are each coupled to their own antenna (A1, A2), are operated in a push-pull mode, and in that an adder (AD) combines the signals detected on the non-linear elements (VD1, VD2).

5. Receiver according to one of the preceding claims, characterized in that the coupling of a planar antenna (A) on one side of a substrate (S) to a planar supply line (LE) on the opposite side of the substrate (S) is provided via a varactor diode (VD) which is connected to the antenna (A) and passes through the substrate (S).

**Revendications**

1. Récepteur pour des signaux micro-ondes à modulation ASK avec un détecteur de courbe enveloppe ayant au moins un élément non linéaire,
   caractérisé en ce que
   l'élément non linéaire (VD, VD1, VD2) se compose principalement d'une réactance commandée.

2. Récepteur selon la revendication 1,
   caractérisé en ce que
   l'élément non linéaire (VD, VD1, VD2) est un varacteur (diode à capacité variable).

3. Récepteur selon la revendication 1,
   caractérisé en ce que
   l'élément non linéaire (VD, VD1, VD2) et l'antenne planaire (A, A1, A2) reliée à cet élément forment un circuit résonant.

4. Récepteur selon l'une des revendications précédentes,
   caractérisé en ce que
   chaque fois deux éléments non linéaires (VD1, VD2) couplés à une unique antenne (A1, A2) sont branchés en opposition de phase et un additionneur (AD) réunit les signaux détectés par les éléments non linéaires (VD1, VD2).

5. Récepteur selon l'une quelconque des revendications précédentes,
   caractérisé en ce que
   le couplage d'une antenne planaire (A) d'un côté d'un substrat (S) a une ligne d'alimentation planaire (LE) sur le côté opposé du substrat (S) se fait par un varacteur (VD), relié à l'antenne (A) et traversant le substrat (S).

U(t)

A

BV

VD

Fig. 1

$R_g$   L   $C_0$

U(t)   $C_B$   U(Q)   $C_A$   $R_A$

$U_0$

Fig. 2

Fig. 3

Fig. 4